# EUROPEAN PATENT SPECIFICATION

(11) **EP 4 300 686 B1**
(45) Date of publication and mention of the grant of the patent: **11.03.2026**
(21) Application number: 22896146.2
(22) Date of filing: 18.11.2022
(51) Int. Cl.: H01M 50/256, H01M 50/244, H01M 50/211, H01M 50/204, H01M 50/264, H01M 50/507

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 19.11.2021 KR 20210159973
(43) Date of publication of application: 03.01.2024
(73) Proprietor: LG Energy Solution, Ltd., Seoul 07335 (KR)
(72) Inventor: SEO, Sung Won, Daejeon 34122 (KR); YUN, Hyeonki, Daejeon 34122 (KR); JU, Eunah, Daejeon 34122 (KR); HARASZTOSI, Uwe, 74172 Neckarsulm (DE); FASSL, Thomas, 75031 Eppingen (DE)
(74) Representative: Plasseraud IP
(86) International application number: PCT/KR2022/018337
(87) International publication number: WO 2023/090949

(56) References cited:
- WO-A2-2011/126216
- JP-A- 2018 174 079
- JP-A- 2021 081 049
- JP-A- 2021 081 049
- JP-A- 2021 144 914
- KR-A- 20190 069 873
- KR-A- 20190 083 533
- KR-A- 20190 083 533

## Description

### [TECHNICAL FIELD]

### Cross Citation with Related Application(s)

This application claims the benefit of Korean Patent Application No. 10-2021-0159973 filed on November 19, 2021 with the Korean Intellectual Property Office.

The present disclosure relates to a battery module and a battery pack including the same, and more particularly, to a battery module including a plurality of battery cells, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery comprises an electrode assembly in which a positive electrode plate and a negative electrode plate, each being coated with the positive electrode active material and the negative electrode active material, are disposed with a separator being interposed between them, and a battery case which seals and houses the electrode assembly together with an electrolyte solution.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are disposed, but in the case of a secondary battery used for a medium- and large-sized device such as automobiles, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BDU (Battery Disconnect Unit), a BMS (battery management system) and a cooling system to form a battery pack. WO 2011/126216 and KR 2019 0083533 disclose an example of battery module.

When configuring a battery pack, it is common to configure a battery module first and then configure a battery pack by using a battery module and adding other components. A conventional battery pack is manufactured by arranging battery modules in a housing structure such as a pack tray, and such a battery pack is mounted on a vehicle or the like.

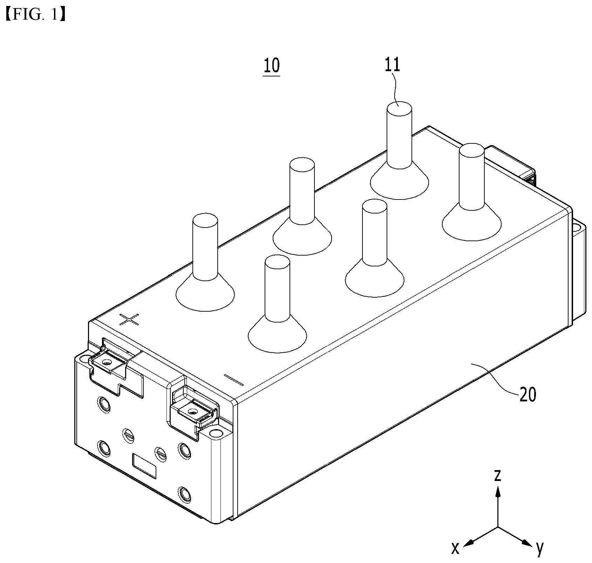

FIG. 1 is a perspective view showing a conventional battery module 10.

Referring to FIG. 1, a conventional battery module 10 has a shape in which a plurality of battery cells are housed and sealed in a module housing 20. A suction device 11 can be used in the process of transferring the battery module 10. Specifically, a plurality of suction devices 11 may be attached to the upper end surface of the module housing 20 of the battery module 10 and operated to transfer the battery module 10. The suction device 11 as described above is one example of a method of transferring the battery module 10, but since the conventional battery module 10 has a module housing 20, it is common to use such a module housing 20 during the transferring process.

In the structure of a battery pack having conventional battery modules, due to the weight and volume of the housing structure itself such as the module housing of the battery module and the pack tray, there is a problem that the energy density of the entire battery pack decreases and the weight of the battery pack increases.

There is a need to develop a battery module that can further increase the energy density and reduce the overall weight through weight reduction, and a battery pack including the same.

### [DETAILED DESCRIPTION OF THE INVENTION]

### [Technical Problem]

It is an object of the present disclosure to provide a battery module capable of increasing an energy density and reducing a weight, and a battery pack including the same.

### [Technical Solution]

A battery module according to one embodiment of the present disclosure comprises a battery cell stack in which a plurality of battery cells are stacked along a direction parallel to the y-axis; and a first side plate and a second side plate each located at both side surfaces of the battery cell stack in the direction parallel to the y-axis. At least one lifting hole is formed in each of the first side plate and the second side plate. The lifting hole has a shape in which an insertion hole and a fastening hole overlap, and an opening area of the insertion hole is larger than an opening area of the fastening hole.

The fastening hole is located higher than the insertion hole, and the opening area of the insertion hole and the opening area of the fastening hole may be connected to each other.

The insertion hole and the fastening hole each may be in the shape of being opened circularly or polygonally.

The battery module may further comprise a first end plate and a second end plate each located on one side and the other side of the battery cell stack; a first busbar frame located between the battery cell stack and the first end plate; and a second busbar frame located between the battery cell stack and the second end plate. The lifting hole may be formed in a portion corresponding to the first busbar frame or a portion corresponding to the second busbar frame in the first side plate or the second side plate.

A chamber portion may be formed in each of a first busbar frame portion corresponding to one of the lifting holes and a second busbar frame portion corresponding to the other of the lifting holes.

The chamber portion may be in the shape of being opened at one side, and the lifting hole may be located at the opened one side of the chamber portion.

The battery module may further comprise busbars mounted on the first busbar frame and the second busbar frame, wherein electrode leads of the battery cells pass through lead slits formed in the first busbar frame or the second busbar frame, and then may be bent and connected to the busbar.

A transfer member may be inserted into the insertion hole, and the transfer member may lift the battery module through the fastening hole.

The battery module may further comprise connecting members that are located at each of the upper and lower sides of the battery cell stack, and connect the first side plate and the second side plate.

The connecting members may be band members that are connected to the first side plate and the second side plate.

The band member may comprise a band body disposed on the upper side or the lower side of the battery cell stack, and band clips bent from the band body and fixed to each of the first side plate and the second side plate.

The connecting members may comprise long bolt members that are fastened with the first side plate and the second side plate.

The connecting members are disposed apart from each other on the upper side or the lower side of the battery cell stack.

A battery pack according to one embodiment of the present disclosure comprises the above-mentioned battery module; and a pack tray that houses the battery module. A first side plate and a second side plate of the battery module may be fixed to a pack tray.

The first side plate and the second side plate each may comprise a support portion that is disposed perpendicular to the bottom portion of the pack tray so as to support the outermost battery cell of the battery cell stack, and a fixing portion that protrudes in a direction perpendicular to one surface of the support portion, and the fixing portion may be fixed to the pack tray.

The battery pack may further comprise a mounting beam that is disposed on the upper surface of the bottom portion of the pack tray, wherein the fixing portion may be fixed to the mounting beam.

The fixing portion may be located higher than the height of the mounting beam in the height direction.

### [Advantageous Effects]

According to embodiments of the present disclosure, it is possible to provide a battery module that is simplified in module structure, has improved energy density per weight and enables weight reduction, and a battery pack including the same.

In addition, module handling using side plates can be applied to conform to the simplification of the module structure, thereby improving manufacturing process efficiency and space utilization.

### [BRIEF DESCRIPTION OF THE DRAWINGS]

FIG. 1 is a perspective view showing a conventional battery module;
FIG. 2 is a perspective view showing a battery module according to one embodiment of the present disclosure;
FIG. 3 is an exploded perspective view of the battery module of FIG. 2;
FIG. 4 is a side view of a battery cell included in the battery module of FIG. 3;
FIG. 5 is a partial perspective view which enlarges and shows a section A of FIG. 2;
FIG. 6 schematically shows a lifting hole according to various embodiments of the present disclosure;
FIG. 7 is a partial perspective view which enlarges and shows a section B of FIG. 3;
FIG. 8 is a perspective view showing a transfer member according to one embodiment of the present disclosure;
FIG. 9 is a perspective view showing the battery module of FIG. 2 and the transfer member of FIG. 8 together;
FIG. 10 is a partial perspective view which enlarges and shows a section C of FIG. 9;
FIG. 11 is a perspective view showing a process of transferring the battery module according to the present embodiment using a transfer member.
FIG. 12 is a perspective view showing a side plate and a connecting member according to another embodiment of the present disclosure;
FIG. 13 is a perspective view showing a first side plate according to one embodiment of the present disclosure;
FIG. 14 is a perspective view showing a battery pack according to one embodiment of the present disclosure; and
FIG. 15 is a partial perspective view showing a method of fixing a battery module to a pack tray in the battery pack according to the present embodiment.

### [DETAILED DESCRIPTION OF THE E MBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

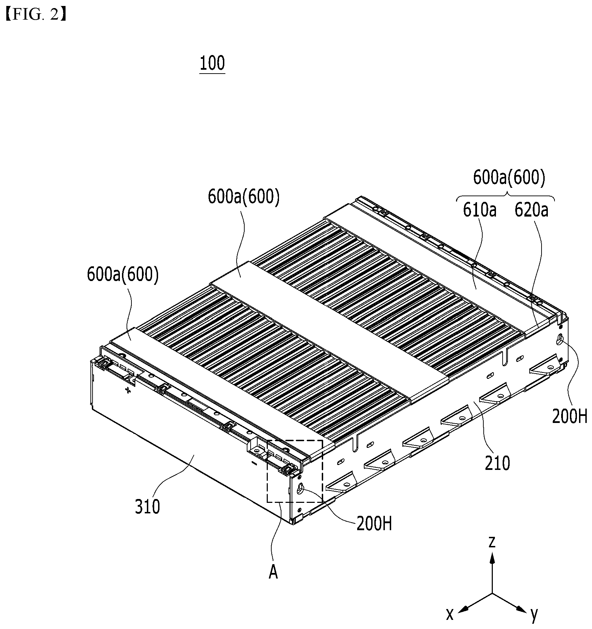

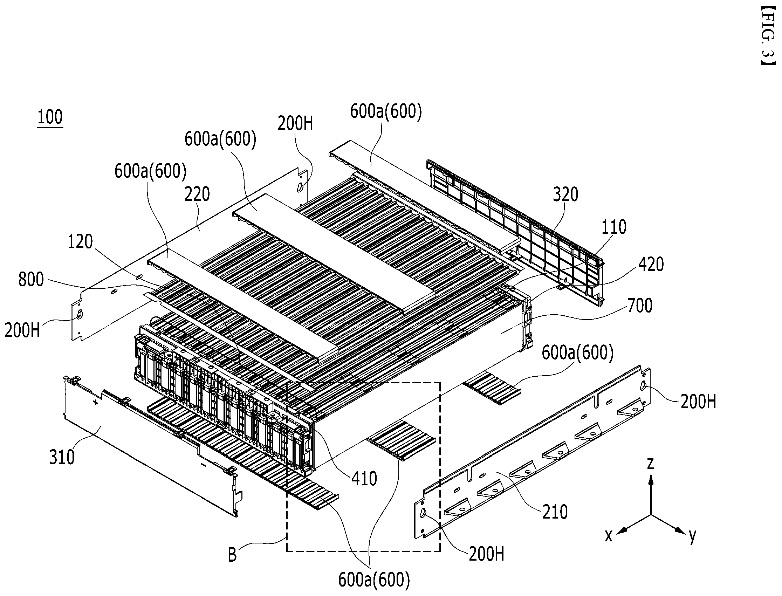

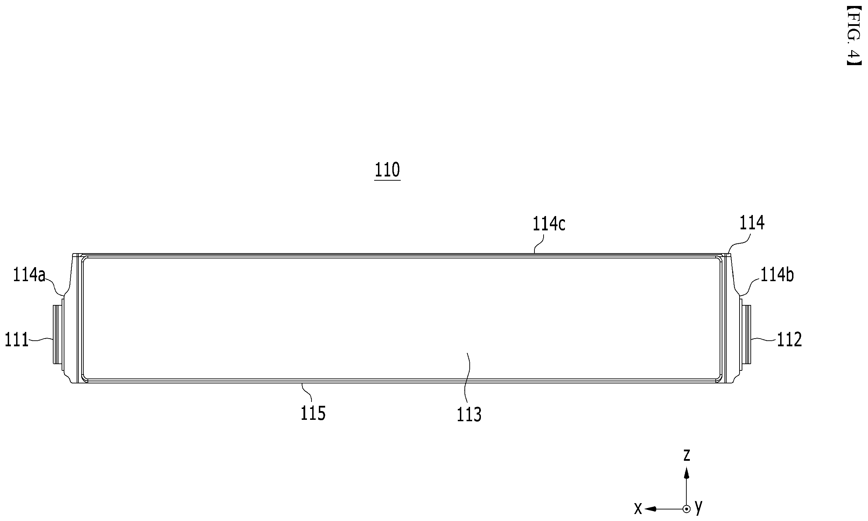

FIG. 2 is a perspective view showing a battery module according to one embodiment of the present disclosure. FIG. 3 is an exploded perspective view of the battery module of FIG. 2. FIG. 4 is a side view of a battery cell included in the battery module of FIG. 3.

Referring to FIGS. 2 to 4, a battery module 100 according to one embodiment of the present disclosure comprises a battery cell stack 120 in which a plurality of battery cells 110 are stacked, and a first side plate 210 and a second side plate 220 each located at both side surfaces of the battery cell stack 120.

First, the battery cell 110 may be a pouch-type battery cell. Such a pouch-type battery cell may be formed by housing the electrode assembly in a pouch case of a laminated sheet containing a resin layer and a metal layer, and then joining the outer peripheral portion of the pouch case. Such a battery cell 110 may be formed in a rectangular sheet-like structure. Specifically, the battery cell 110 according to the present embodiment has a structure in which two electrode leads 111 and 112 face each other and protrude from one end 114a and the other end 114b of the cell main body 113, respectively. The battery cell 110 can be produced by joining both ends 114a and 114b of a battery case 114 and one side portion 114c connecting them in a state in which an electrode assembly (not shown) is housed in a battery case 114. In other words, the battery cell 110 according to the present embodiment has a total of three sealing portions, the sealing portions have a structure that is sealed by a method such as fusion, and the remaining other side portion may be composed of a connecting portion 115.

However, the battery cell 110 described above is an illustrative structure, and it goes without saying that a unidirectional battery cell in which the two electrode leads protrude in the same direction is available.

Such a battery cell 110 may be formed by a plurality of numbers, and the plurality of battery cells 110 may be stacked so as to be electrically connected to each other, thereby forming a battery cell stack 120. Particularly, as shown in FIG. 3, the plurality of battery cells 110 is stacked along the direction parallel to the y-axis. The battery case 114 is generally constituted in a laminated structure of resin layer/metal thin film layer/resin layer. For example, when the surface of the battery case is formed of an O (oriented)-nylon layer, it tends to slide easily due to external impact when stacking a plurality of battery cells to form a medium- or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be attached to the surface of the battery case to form a battery cell stack 120.

The first side plate 210 and the second side plate 220 each are located at both side surfaces of the battery cell stack 120 so as to support the battery cell stack 120. More specifically, they are located at both side surfaces in a direction in which a plurality of battery cells 110 are stacked, that is, in a direction parallel to the y-axis in FIG. 3. At least one lifting hole 200H is formed in each of the first side plate 210 and the second side plate 220. The lifting hole 200H will be described later.

Meanwhile, the battery module 100 according to the present embodiment may include connecting members 600 that are located at each of the upper side and the lower side of the battery cell stack 120, and connect the first side plate 210 and the second side plate 220.

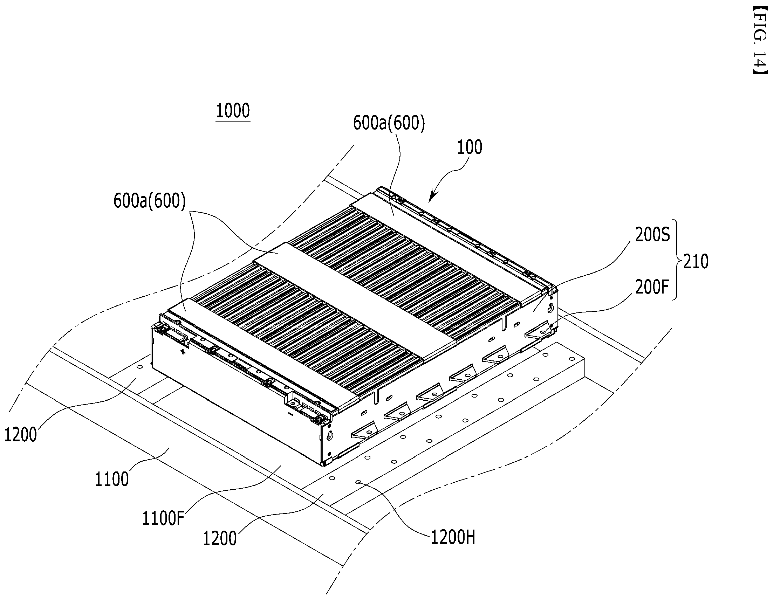

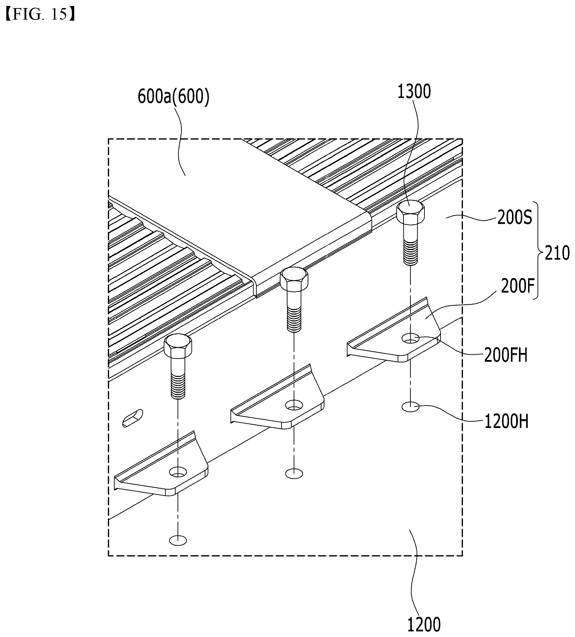

Unlike the conventional battery module 10, the battery module 100 according to the present embodiment is not in the shape in which the battery cell stack 120 is housed and sealed in a module housing, but has a structure in which the first side plate 210 and the second side plate 220 are disposed on both side surfaces of the battery cell stack 120, and the first side plate 210 and the second side plate 220 are fixed via the connecting members 600. That is, the battery module 100 according to the present embodiment has a simplified module housing structure as compared to a conventional one, and can be mounted directly to a battery pack without a sealed module housing. The shape of being mounted to the battery pack will be described later along with FIGS. 14 and 15.

Ultimately, in the present embodiment, the module housing structure is omitted, thereby increasing space utilization in a battery pack unit, improving overall energy density, and enabling weight reduction, which will be described later. Further, as shown in FIG. 3, the connecting members 600 may be disposed apart from each other on the upper side or the lower side of the battery cell stack 120. A thermally conductive member and a heat sink can be disposed in the space between the spaced apart connecting members 600. This leads to an advantage that the cooling member in the module unit and the cooling member in the pack unit can be integrated to provide only one cooling member. That is, it is possible to integrate and shorten the cooling path of the battery module 100 inside the battery pack, thereby realizing the effect of weight reduction and cost reduction.

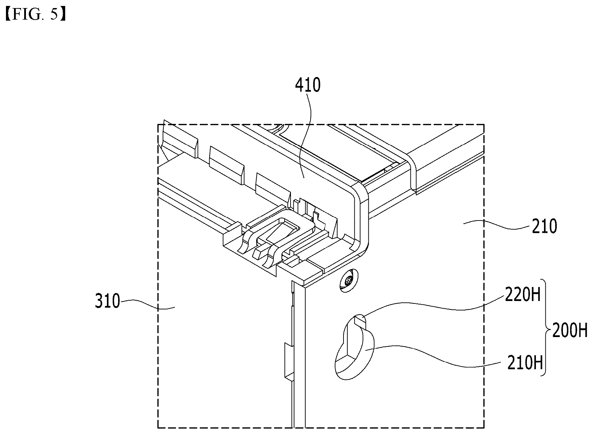

Next, the lifting hole according to the present embodiment will be described in detail with reference to FIG. 5 and the like.

FIG. 5 is a partial perspective view which enlarges and shows a section A of FIG. 2.

Referring to FIGS. 2, 3 and 5 together, at least one lifting hole 200H is formed in each of the first side plate 210 and the second side plate 220 according to the present embodiment. The number and position of the lifting holes 200H are not particularly limited, but as an example, as shown in FIG. 3, two lifting holes 200H may be formed at portions adjacent to each of both ends of the first side plate 210, and the other two lifting holes 200H may be formed at portions adjacent to each of both ends of the second side plate 220.

The lifting hole 200H is a through hole formed in the first side plate 210 and in the second side plate 220, and has a shape in which an insertion hole 210H and a fastening hole 220H overlap. In other words, as illustrated, this is a shape in which two holes overlap each other, which may be a shape in which the opening area of the insertion hole 210H and the opening area of the fastening hole 220H may be connected to each other. The opening area of the insertion hole 210H is larger than the opening area of the fastening hole 220H. Also, the fastening hole 220H is located higher than the insertion hole 210H.

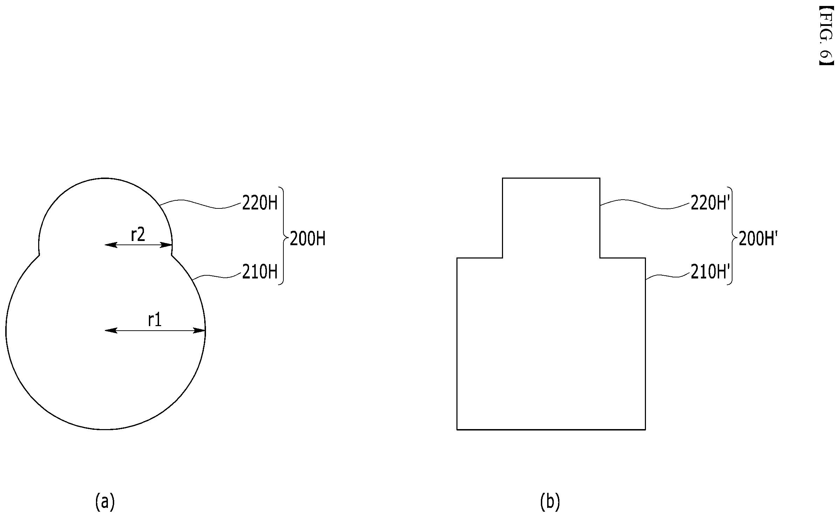

FIG. 6 schematically shows a lifting hole according to various embodiments of the present disclosure.

Referring to FIGS. 6(a) and (b), in the lifting holes 200H and 200H' according to the present embodiments, if the opening areas of the insertion holes 210H and 210H' are larger than the opening areas of the fastening holes 220H and 220H', the shapes of the insertion holes 210H and 210H' and the fastening holes 220H and 220H' are not particularly limited, but the insertion holes 210H and 210H' and the fastening holes 220H and 220H' may be in the shape of being opened circularly or polygonally.

FIG. 6(a) shows an embodiment in which the insertion hole 210H and the fastening hole 220H are each circularly opened. Since the radius r1 of the insertion hole 210H is formed larger than the radius r2 of the fastening hole 220H, so that the insertion hole 210H can have a larger opening area.

FIG. 6(b) shows an illustrative diagram in which the insertion hole 210H' and the fastening hole 220H' each are opened in a rectangular shape as an example of a polygonal opening shape. Similarly, the insertion hole 210H' may have a larger opening area.

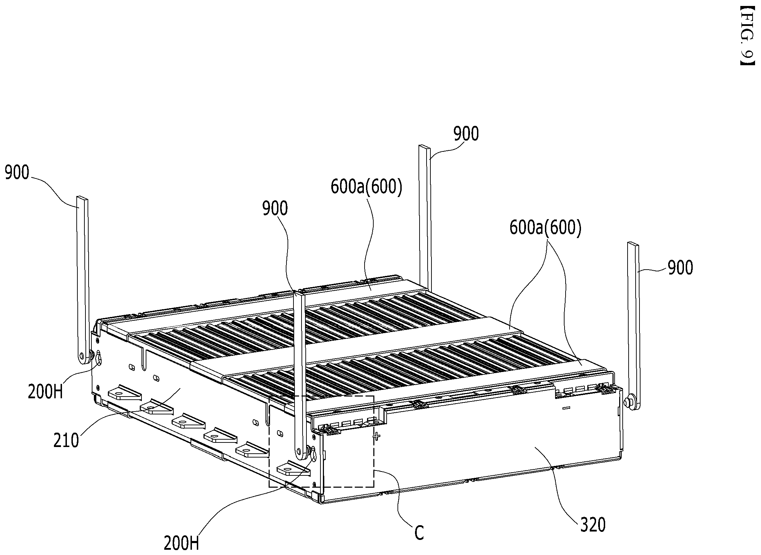

The function of the lifting hole 200H will be described later in detail with reference to FIGS. 9 to 11.

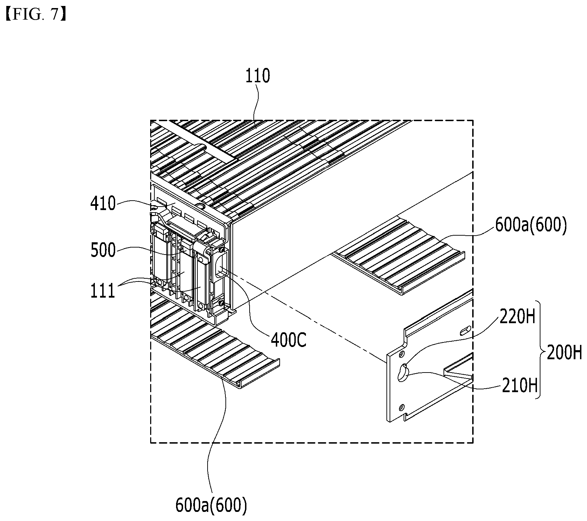

FIG. 7 is a partial perspective view which enlarges and shows a section B of FIG. 3.

Referring to FIGS. 3, 4, 5 and 7 together, the battery module 100 according to the present embodiment may further comprise a first end plate 310 and a second end plate 320 each located on one side and the other side of the battery cell stack 120; a first busbar frame 410 located between the battery cell stack 120 and the first end plate 310; and a second busbar frame 420 located between the battery cell stack 120 and the second end plate 320.

More specifically, the first busbar frame 410 and the first end plate 310 may be sequentially located on one side of the direction (x-axis direction) in which any one electrode lead 111 (see FIG. 4) of the battery cells 110 protrudes, and the second busbar frame 420 and the second end plate 320 may be sequentially located on the other side of the direction (-x-axis direction) in which the other electrode lead 112 (see FIG. 4) of the battery cell 110 protrudes.

The first busbar frame 410 and the second busbar frame 420 may be disposed so as to cover each of the front surface and the rear surface of the battery cell stack corresponding to the directions (x-axis direction and -x-axis direction) in which the electrode leads 111 and 112 protrude.

The first end plate 310 and the second end plate 320 may be respectively disposed so as to cover one surface of the first busbar frame 410 and one surface of the second busbar frame 420. The first end plate 310 and the second end plate 320 may be plastic insulating covers having electrical insulation, and can protects the busbar 500 of electrode leads 111 and 112 located on the first busbar frame 410 and the second busbar frame 420, and other electrical components from the outside, and at the same time, cut off occurrence possibility of short-circuit with the outside. Meanwhile, a coupling method between the first and second end plates 310 and 320 and the first and second side plates 210 and 220 is not particularly limited, and a mechanical coupling method or a bolt coupling can be applied as an example.

Meanwhile, in another embodiment of the present disclosure, the first end plate 310 and the second end plate 320 may include a metal material such as aluminum and thus have high stiffness. However, in this case, it is preferable to add separate insulation covers between the first end plate 310 and the first bus bar frame 410 and between the second end plate 320 and the second busbar frame 420.

As shown in FIG. 7, the battery module 100 according to the present embodiment may further include busbars 500 mounted on the first busbar frame 410 and the second busbar frame 420. Illustration of the second busbar frame 420 and the busbar 500 mounted thereto are omitted, but they may have a structure similar to that of the first busbar frame 410 shown in FIG. 7.

The electrode leads 111 and 112 of the battery cell 110 may pass through lead slits formed in the first busbar frame 410 or the second busbar frame 420 and then be bent and connected to the busbar 500. More specifically, any one electrode lead 111 may pass through the lead slit of the first busbar frame 410, and be connected to the busbar 500, and the other electrode lead 112 may pass through the lead slit of the second busbar frame 420, and then be connected to the busbar 500. The connection method between the electrode leads 111 and 112 and the busbar 500 is not particularly limited, but weld junction may be performed as an example.

In the same way as above, the battery cells 110 constituting the battery cell stack 120 may be connected in series or parallel to each other.

Meanwhile, although not specifically illustrated, a terminal busbar for external power connection of the battery module 100 or a module connector for transmitting voltage and temperature sensing information may be mounted on the first busbar frame 410 or the second busbar frame 420.

The first side plate 210 and the second side plate 220 according to the present embodiment may be disposed so as to cover up to the side surface of the first bus bar frame 410 and the side surface of the second busbar frame 420. At this time, the lifting holes 200H may be formed in a portion corresponding to the first busbar frame 410 or a portion corresponding to the second busbar frame 420 in the first side plate 210 or the second side plate 220.

That is, as shown in FIG. 3, the two lifting holes 200H adjacent to each of both ends of the first side plate 210 may be respectively formed in a portion corresponding to the first busbar frame 410 and a portion corresponding to the second busbar frame 420. In addition, the two lifting holes 200H adjacent to each of both ends of the second side plate 220 may be respectively formed in a portion corresponding to the first busbar frame 410 and a portion corresponding to the second busbar frame 420.

Further, referring to FIG. 7, a chamber portion 400C may be formed in each of the portion of the first busbar frame 410 corresponding to one of the lifting holes 200H and the portion of the second busbar frame 420 corresponding to the other of the lifting holes 200H. FIG. 7 shows only the chamber portion 400C formed in the first busbar frame 410, but similarly, the chamber portion 400C may also be formed in the second busbar frame 420.

The chamber portion 400C may be in the shape of opened on one side. More specifically, the chamber portion 400C may be a portion in which one side is opened and the other side is closed, while being recessed into the other side in the opposite direction to the one side. A lifting hole 200H according to the present embodiment may be located on the opened one side of the chamber portion 400C.

In order to handle the battery module 100, which will be covered later, the transfer member 900 is inserted into the lifting hole 200H according to the present embodiment, wherein the chamber portion 400C according to the present embodiment may protect internal components of the battery module 100 from the transfer member 900.

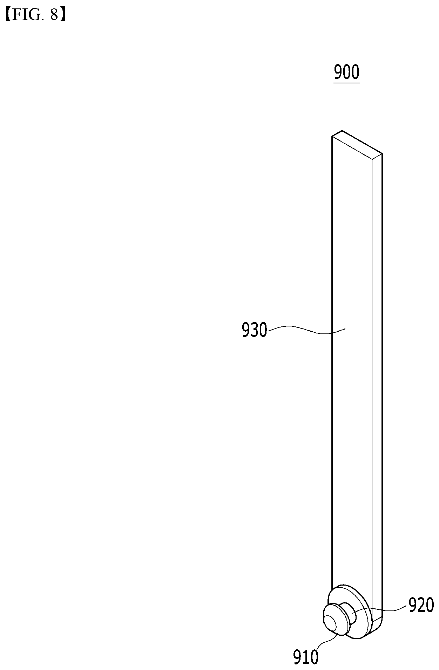

Next, a handling method of the battery module 100 using the lifting hole 200H according to the present embodiment will be described in detail with reference to FIGS. 8 to 11. A handling method of the battery module 100 using the lifting hole 200H, the battery module being according to the present embodiment will be described in detail. Here, the handling method is a concept that collectively refers to transporting or handling the battery module 100, as in a process of moving the battery module 100 or assembling it into a battery pack.

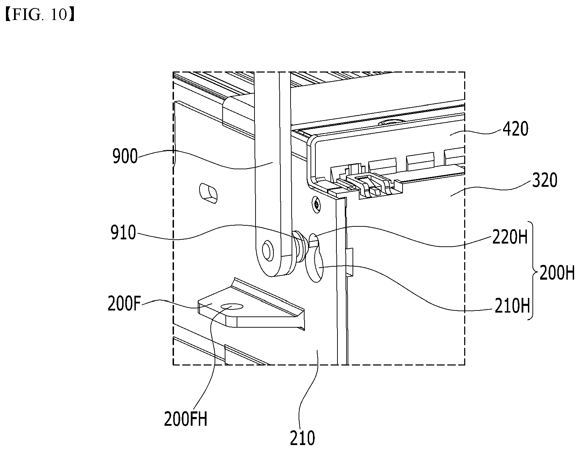

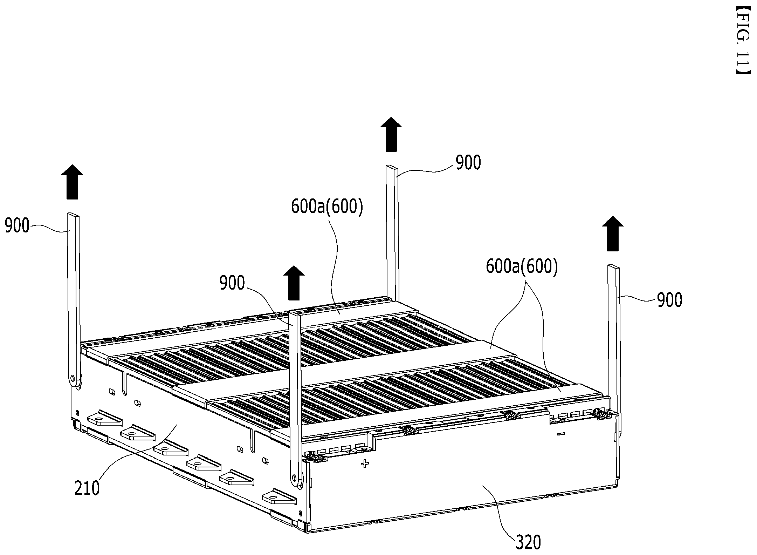

FIG. 8 is a perspective view showing a transfer member. FIG. 9 is a perspective view showing the battery module of FIG. 2 and the transfer member of FIG. 8 together. FIG. 10 is a partial perspective view which enlarges and shows a section C of FIG. 9. FIG. 11 is a perspective view showing a process of transferring the battery module according to the present embodiment using a transfer member.

Referring to FIGS. 8 to 11 together, the transfer member 900 is inserted into the lifting hole 200H, and the transfer member 900 can lift the battery module 100 through the fastening hole 220H.

Specifically, the transfer member 900 may include an insertion portion 910, a fastening portion 920 and a rod portion 930. The insertion portion 910 is a member inserted into the insertion hole 210H of the lifting hole 200H, and may have a shape corresponding to the opening shape of the insertion hole 210H. The fastening portion 920 is a member that can be coupled to the fastening hole 220H of the lifting hole 200H, which may connect the insertion portion 910 and the rod portion 930 and have a shape corresponding to the opening shape of the fastening hole 220H. FIG. 8 shows an insertion portion 910 and a fastening portion 920 having a circular shape so that they can be inserted into the insertion hole 210H and the fastening hole 220H which are circularly opened. The opening area of the fastening hole 220H is smaller than that of the insertion hole 210H, and the fastening portion 920 has a smaller radius than the insertion portion 910 in conformity therewith. Meanwhile, the radius of the insertion portion 910 may be smaller than the radius of the insertion hole 210H and may be larger than the radius of the fastening hole 220H. The rod portion 930 may be a rod-shaped member connected with the fastening portion 920.

FIGS. 9 and 10 show a state before the insertion portion 910 and the fastening portion 920 are inserted into the insertion hole 210H. First, the insertion portion 910 and the fastening portion 920 of the transfer member 900 are inserted into the insertion hole 210H of the lifting hole 200H. Then, as shown in FIG. 11, as the transfer member 900 is lifted upward, the fastening portion 920 is coupled to the fastening hole 220H, so that the battery module 100 can be transferred. When the transfer member 900 moves upward, the fastening hole 220H is located higher than the insertion hole 210H so that the fastening portion 920 is naturally coupled to the fastening hole 220H.

Further, as described above, since the radius of the insertion portion 910 is smaller than the radius of the insertion hole 210H and may be larger than the radius of the fastening hole 220H, the fastening portion 920 comes into contact with the fastening hole 220H, and then the insertion portion 910 may function as a hooking structure. That is, the insertion portion 910 can prevent the transfer member 900 from deviating to the outside through the fastening hole 220H during the handling process of the battery module 100.

Unlike the handling method using the module housing in the conventional battery module 10 shown in FIG. 1, the battery module 100 according to the present embodiment is in the shape in which the module housing structure is omitted, and the lifting holes 200H for handling are provided in the first side plate 210 and the second side plate 220 in conformity therewith. That is, the lifting hole 200H and the transfer member 900 may implement a handling method that can be optimally applied to the battery module 100 of the present embodiment in which the module housing is simplified. In addition, since the battery module 100 can be lifted only by the transfer member 900 without a lot of space or parts, the handling process can be simplified and the costs can be reduced.

Meanwhile, as described above, at this time, the lifting holes 200H may be formed in a portion corresponding to the first busbar frame 410 or a portion corresponding to the second busbar frame 420 in the first side plate 210 or the second side plate 220. Accordingly, the chamber portion 400C may be provided in the first busbar frame 410 and the second busbar frame 420, and the internal components of the battery module 100 can be protected from the transfer member 900 during the handling process.

Further, when the lifting holes 200H are disposed in a portion corresponding to the first busbar frame 410 and a portion corresponding to the second busbar frame 420, they are located at four corners in the battery module 100, so that the battery module 100 can be stably lifted.

Next, the connecting member applied to the battery module according to the present embodiment will be described in detail.

Referring to FIGS. 2 and 3 again, the battery module 100 may include the connecting member 600 that connects the first side plate 210 and the second side plate 220, as described above.

At this time, the connecting member 600 according to the present embodiment may be a band member 600a connected with the first side plate 210 and the second side plate 220. The band member 600a may include an elastic metal material, and may be provided by a single or a plurality of numbers. In the case of the band members 600a disposed by a plurality of numbers, it may be located apart from each other at regular intervals. In FIGS. 2 and 3, the state in which three band members 600a are disposed at each of the upper side and the lower side of the battery cell stack 120 is shown as an example.

Such a band member 600a may include a band body 610a and a band clip 620a. The band body 610a is made of a material having elasticity with a predetermined length, and may be disposed on at least one of the upper side or the lower side of the battery cell stack 120.

The band clip 620a is integrally formed with the band body 610a, and may be bent at both ends of the band body 610a and fixed to the first side plate 210 or the second side plate 220. The band clip 620a may be fixed to the first side plate 210 or the second side plate 220 by a method such as weld junction.

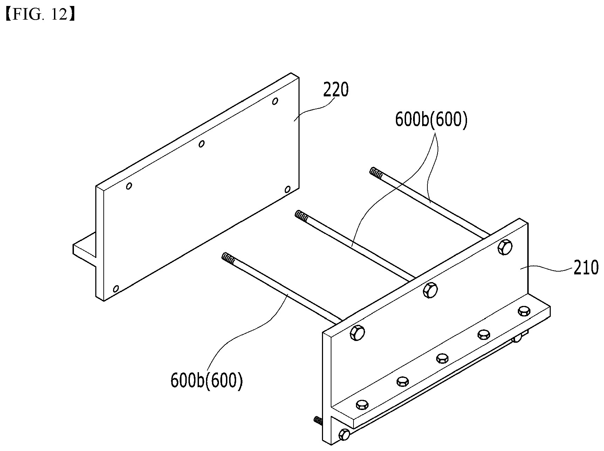

FIG. 12 is a perspective view showing a side plate and a connecting member according to another embodiment of the present disclosure. For convenience of explanation, other components are omitted, and only the first side plate 210, the second side plate 220, and the connecting member 600 are illustrated.

Referring to FIG. 12, in another embodiment of the present disclosure, the connecting member 600 may include a long bolt member 600b that is fastened with the first side plate 210 and the second side plate 220. The long bolt member 600b may be provided by at least one or a plurality of numbers.

The long bolt member 600b is fastened through the first side plate 210 and the second side plate 220 to fix the first side plate 210 and the second side plate 220. This long bolt member 600b may be disposed on at least one of the upper side or the lower side of the battery cell stack 120.

Next, the support portion and the fixing portion of the first side plate and the second side plate according to the present embodiment will be described in detail.

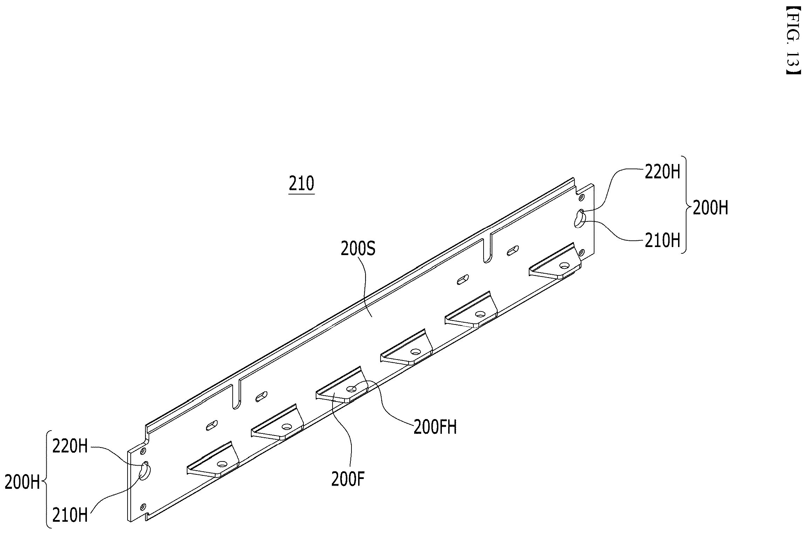

FIG. 13 is a perspective view showing a first side plate according to one embodiment of the present disclosure. Since the second side plate may have the same or similar structure as the first side plate, the first side plate will be mainly described below.

Referring to FIGS. 2, 3 and 13, the first side plate 210 and the second side plate 220 according to the present embodiment may include a support portion 200S that supports the outermost battery cell of the battery cell stack, and a fixing portion 200F that protrudes in a direction perpendicular to one surface of the support portion 200S.

The above-mentioned lifting hole 200H may be formed in the support portion 200S of the first side plate 210 and the second side plate 220. A through hole 200FH for mounting and fixing may be formed in the fixing portion 200F. The number of fixing portions 200F is not particularly limited, and may be provided by a single or a plurality of numbers. In FIG. 13, a state in which a plurality of fixing portions 200F are disposed at predetermined intervals is illustrated.

Next, a configuration of a battery pack according to one embodiment of the present disclosure and a mounting fixing method using the fixing portions of the first side plate and the second side plate described above will be described in detail.

FIG. 14 is a perspective view showing a battery pack according to one embodiment of the present disclosure. FIG. 15 is a partial perspective view showing a method of fixing a battery module to a pack tray in the battery pack.

Referring to FIGS. 13 to 15 together, a battery pack 1000 according to one embodiment of the present disclosure includes a battery module 100 and a pack tray 1100 for housing the battery module.

The pack tray 1100 is a structure having an internal space, and one or more battery modules 100 may be housed therein. One or more battery modules 100 are disposed on the bottom portion 1100F of the pack tray 1100. Although not specifically illustrated, a pack cover for covering the opened upper portion of the pack tray 1100 may be disposed.

At this time, in case of external vibration or impact, it is necessary to mount and fix the battery module 100 to the pack tray 1100. The first side plate 210 and the second side plate 220 of the battery module 100 according to the present embodiment are fixed to the pack tray 1100.

Specifically, as described above, the first side plate 210 and the second side plate 220 may include a support portion 200S that supports the outermost battery cells of the battery cell stack and is disposed perpendicular to the bottom portion 1100F of the pack tray 1100, and a fixing portion 200F that protrudes in a direction perpendicular to one surface of the support portion 200S. At this time, the fixing portion 200F may be fixed to the pack tray 1100.

More specifically, the battery pack 1000 according to the present embodiment may further include a mounting beam 1200 that is disposed on an upper surface of the bottom portion 1100F of the pack tray 1100, and the fixing portion 200F may be fixed to the mounting beam 1200.

The mounting beam 1200 has a shape extending along one direction from the upper surface of the bottom portion 1100F of the pack tray 1100. Although not specifically illustrated, when a plurality of battery modules 100 are disposed, a mounting beam 1200 may be located between the battery modules 100. The mounting beam 1200 may fix the battery module 100 and buffer impacts transmitted to the battery module 100 from external impacts.

As shown in FIG. 15, a through hole 200FH for mounting and fixing may be formed in the fixing portion 200F. Meanwhile, the fixing portion 200F may be located higher than the height of the mounting beam 1200 in the height direction. Here, the height direction means a direction perpendicular to one surface of the bottom portion 1100F of the pack tray 1100.

The fixing portion 200F may be fixed to the upper surface of the mounting beam 1200, and a bolt engagement can be performed as shown in FIG. 15. That is, a mounting hole 1200H having a screw thread formed therein may be formed on the upper surface of the mounting beam 1200. The bolt-shaped fastening member 1300 passes through the through hole 200FH of the fixing portion 200F and then can be inserted and fastened into the mounting hole 1200H.

As described above, the battery module 100 according to the present embodiment can be fixed to the pack tray 1100 through the first side plate 210 and the second side plate 220 to configure a battery pack 1000.

Meanwhile, the battery cells 110 may cause a phenomenon in which the internal electrolyte decomposes to generate gas and the battery cell 110 swells in the process of repeating charging and discharging, that is, a swelling phenomenon. If the swelling of the battery cell 110 cannot be controlled, it may cause a structural deformation of the battery module 100 in which the plurality of battery cells 110 are stacked, and may adversely affect the durability and performance of the battery module 100.

Particularly, in recent years, Pure Si cells, all-solid-state batteries, and SiO high-content cells have been used as battery cells in order to manufacture high-capacity battery modules and battery packs, but in the case of the cells, the degree of swelling is greater. That is, in order to manufacture high-capacity battery modules and battery packs, it is essential to effectively control swelling of the battery cells 110 inside the battery modules or the battery packs. Referring to FIG. 3 again, since the pouch-type battery cells 110 usually have a large degree of swelling in the thickness direction, structures directly related to the swelling control are the first side plate 210 and the second side plate 220 disposed on both side surfaces of the battery cell stack 120.

The battery module 100 according to the present embodiment has a simplified housing structure through the first side plate 210 and the second side plate 220 and the connecting member 600 connecting them, rather than a module housing having a shape that integrally surrounds the battery cell stack. Since it is not the shape of the conventional module housing shown in FIG. 1, it may be difficult to have lateral stiffness and durability sufficient to control swelling of the battery cells 110.

Therefore, the battery pack 1000 according to the present embodiment has been designed such that in the arrangement of the battery module 100 having a simplified housing structure, while the first side plate 210 and the second side plate 220 are directly coupled and fixed to the mounting beam 1200 on the pack tray 1100, the mounting beam 1200 supports the first side plate 210 or the second side plate 220 from the side and controls swelling.

That is, mounting fixation is performed through the first side plate 210 and the second side plate 220, and at the same time, the mounting beam 1200 can supplement the stiffness and durability of the battery module 100 for swelling control.

Taken together, the first side plate 210 and the second side plate 220 according to the present embodiment can be formed with a lifting hole 200H in the battery module 100 having a simplified housing structure to function as a handling structure, can be directly fixed to the mounting beam 1200 on the pack tray 1100 to perform the function of mounting fixation, and can also perform a function of supplementing the stiffness for swelling control of the battery module 100.

Meanwhile, referring to FIG. 3 again, a compression pad 700 may be located between one side of the battery cell stack 120 and the first side plate 210 and between the other side of the battery cell stack 120 and the second side plate 220. The compression pad 700 is a member in the form of a foam, and may be disposed for the purpose of absorbing swelling and heat insulation of the battery cells 110.

In addition, the battery module 100 according to the present embodiment further includes an insulating sheet 800 located between the battery cell stack 120 and the connecting members 600 located on the upper side of the battery cell stack 120. The insulating sheet 800 is an electrically insulating thin sheet, and may be disposed so as to cover the entire upper surface of the battery cell stack 120 in order to ensure electrical insulation of the upper side of the battery cell stack 120. The insulating sheet 800 may be an insulating film or an insulating tape, and may have a thickness of 0.1 mm or less.

In another embodiment of the present disclosure, an insulating sheet cannot also be disposed between the battery cell stack 120 and the connecting members 600. That is, an embodiment in which the upper surface of the battery cell stack 120 is exposed to the outside through between the connecting members 600 is also possible.

Meanwhile, although not specifically illustrated, the battery pack according to the present embodiment may further include not only battery modules but also various control and protection systems such as a BMS (Battery Management System), a BDU (Battery Disconnect Unit), and a cooling system.

The above-mentioned battery module or battery pack according to the present embodiment can be applied to various devices. Specifically, such a device can be applied to a vehicle means such as an electric bicycle, an electric vehicle, or a hybrid vehicle, or an ESS (Energy Storage System), but the present disclosure is not limited thereto, and is applicable to various devices that can use a secondary battery.

The terms representing directions such as the front side, the rear side, the left side, the right side, the upper side, and the lower side have been used in embodiments of the present disclosure, but it is obvious to those skilled in the art that the terms used are provided simply for convenience of description and may become different according to the position of an object, the position of an observer, or the like.

### [Description of Reference Numerals]

100: battery module
110: battery cell
210: first side plate
220: second side plate
200H: lifting hole
210H: insertion hole
220H: fastening hole

## Claims

1. A battery module (100) comprising:
a battery cell stack (120) in which a plurality of battery cells (110) are stacked along a direction parallel to the y-axis; and
a first side plate (210) and a second side plate (220) each located at both side surfaces of the battery cell stack (120) in the direction parallel to the y-axis,
wherein at least one lifting hole (200H) is a through hole formed in each of the first side plate (210) and the second side plate (220),
wherein the lifting hole (200H) has a shape in which an insertion hole (210H) and a fastening hole (220H) overlap, and
wherein an opening area of the insertion hole (210H) is larger than an opening area of the fastening hole (220H), and the fastening hole (220H) is located higher than the insertion hole (210H).

2. The battery module (100) according to claim 1, wherein:
the insertion hole (210H) and the fastening hole (220H) each are in the shape of being opened circularly or polygonally (220H).

3. The battery module according to claim 1, further comprising:
a first end plate (31) and a second end plate (320) each located on one side and the other side of the battery cell stack (120);
a first busbar frame (410) located between the battery cell stack (120) and the first end plate (310); and
a second busbar frame (420) located between the battery cell stack (120) and the second end plate (320),
wherein the first end plate (310) and the first bus bar frame (410) are sequentially located on one side of the x-axis direction in which the electrode leads (111) of the battery cells (110) protrude,
wherein the second end plate (320) and the second bus bar frame (430) are sequentially located on the other side of the x-axis direction in which the other electrode leads (112) of the battery cells (110) protrude,
wherein the at least one lifting hole (200H) formed in the first side plate (210) is formed in a portion of the first side plate (210) corresponding to the first busbar frame (410) and corresponding to the second busbar frame (420), and
the at least one lifting hole (200H) formed in the second side plate (220) is formed in a portion of the second side plate (220) corresponding to the first busbar frame (410) and corresponding to the second busbar frame (420).

4. The battery module (100) according to claim 3, wherein:
a chamber portion is formed in each of a first busbar frame portion corresponding to one of the lifting holes and a second busbar frame portion corresponding to the other of the lifting holes.

5. The battery module (100) according to claim 4, wherein:
the chamber portion (400C) is in the shape of being opened at one side, and
the lifting hole (200H) is located at the opened one side of the chamber portion (400C).

6. The battery module (100) according to claim 3,
further comprising busbars (500) mounted on the first busbar frame (410) and the second busbar frame (420),
wherein electrode leads (111, 112) of the battery cells (110) pass through lead slits formed in the first busbar frame (410) or the second busbar frame (420), and then are bent and connected to the busbar (500).

7. The battery module (100) according to claim 1, wherein:
the insertion hole (210) is configured to enable a transfer member (900) to be inserted therein, and
the fastening hole (220H) is configured to enable the transfer member (900) to lift the battery module (100) through it.

8. The battery module (100) according to claim 1, further comprising:
connecting members (600) that are each located at each of the upper and lower sides of the battery cell stack (120), and connect the first side plate (210) and the second side plate (220).

9. The battery module (100) according to claim 8, wherein:
the connecting members (600) are band members (600a) that are connected to the first side plate (210) and the second side plate (220), and
the band member (600a) comprises a band body (610a) disposed on the upper side or the lower side of the battery cell stack (120), and band clips (620a) bent from the band body (610a) and fixed to each of the first side plate (210) and the second side plate (220).

10. The battery module (100) according to claim 8, wherein:
the connecting members (600) comprise long bolt members (600b) that are fastened with the first side plate (210) and the second side plate (220).

11. The battery module (100) according to claim 8, wherein:
the connecting members (600) are disposed apart from each other on the upper side or the lower side of the battery cell stack (120).

12. A battery pack comprising:
the battery module (100) as set forth in claim 1; and
a pack tray (1100) that houses the battery module (100),
wherein the first side plate (210) and the second side plate (220) of the battery module (100) are fixed to the pack tray (1100).

13. The battery pack according to claim 12, wherein:
the first side plate (210) and the second side plate (220) each comprises a support portion (200S) that is disposed perpendicular to the bottom portion of the pack tray (1100) so as to support the outermost battery cell (110) of the battery cell stack (120), and a fixing portion (200F) that protrudes in a direction perpendicular to one surface of the support portion (200S), and
the fixing portion (200F) is fixed to the pack tray (1100).

14. The battery pack according to claim 13,
further comprising a mounting beam (1200) that is disposed on the upper surface of the bottom portion of the pack tray (1100),
wherein the fixing portion (200F) is fixed to the mounting beam (1200), and
wherein the fixing portion (200F) is located higher than the height of the mounting beam (1200) in the height direction.

## Patentansprüche

1. Batteriemodul (100), umfassend:
einen Batteriezellenstapel (120), in welchem eine Mehrzahl von Batteriezellen (110) entlang einer Richtung parallel zu der Y-Achse gestapelt sind; und
eine erste Seitenplatte (210) und eine zweite Seitenplatte (220), welche jeweils an beiden Seitenflächen des Batteriezellenstapels (120) in der Richtung parallel zu der Y-Achse angeordnet sind,
wobei wenigstens ein Hebeloch (200H) ein Durchgangsloch ist, welches in jeder von der ersten Seitenplatte (210) und der zweiten Seitenplatte (220) gebildet ist,
wobei das Hebeloch (200H) eine Form aufweist, in welcher ein Einsetzungsloch (210H) und ein Befestigungsloch (220H) sich überlappen, und
wobei ein Öffnungsbereich des Einsetzungslochs (210H) größer ist als ein Öffnungsbereich des Befestigungslochs (220H) und das Befestigungsloch (220H) höher angeordnet ist als das Einsetzungsloch (210H).

2. Batteriemodul (100) nach Anspruch 1, wobei:
das Einsetzungsloch (210H) und das Befestigungsloch (220H) jeweils geformt sind, sodass sie kreisförmig oder polygonal (220H) geöffnet sind.

3. Batteriemodul nach Anspruch 1, ferner umfassend:
eine erste Endplatte (31) und eine zweite Endplatte (320), welche jeweils an einer Seite und der anderen Seite des Batteriezellenstapels (120) angeordnet sind;
einen ersten Stromschienenrahmen (410), welcher zwischen dem Batteriezellenstapel (120) und der ersten Endplatte (310) angeordnet ist; und
einen zweiten Stromschienenrahmen (420), welcher zwischen dem Batteriezellenstapel (120) und der zweiten Endplatte (320) angeordnet ist, wobei die erste Endplatte (310) und der erste Stromschienenrahmen (410) sequenziell an einer Seite der X-Achsen-Richtung angeordnet sind, in welcher die Elektrodenleitungen (111) der Batteriezellen (110) hervorstehen,
wobei die zweite Endplatte (320) und der zweite Stromschienenrahmen (430) sequenziell an der anderen Seite der X-Achsen-Richtung angeordnet sind, in welcher die anderen Elektrodenleitungen (112) der Batteriezellen (110) hervorstehen,
wobei das wenigstens eine Hebeloch (200H), welches in der ersten Seitenplatte (210) gebildet ist, in einem Abschnitt der ersten Seitenplatte (210) gebildet ist, welcher dem ersten Stromschienenrahmen (410) entspricht und welcher dem zweiten Stromschienenrahmen (420) entspricht, und
das wenigstens eine Hebeloch (200H), welches in der zweiten Seitenplatte (220) gebildet ist, in einem Abschnitt der zweiten Seitenplatte (220) gebildet ist, welcher dem ersten Stromschienenrahmen (410) entspricht und welcher dem zweiten Stromschienenrahmen (420) entspricht.

4. Batteriemodul (100) nach Anspruch 3, wobei:
ein Kammerabschnitt in jedem von einem ersten Stromschienenrahmenabschnitt, welcher einem der Hebelöcher entspricht, und einem zweiten Stromschienenrahmenabschnitt gebildet ist, welcher dem anderen der Hebelöcher entspricht.

5. Batteriemodul (100) nach Anspruch 4, wobei:
der Kammerabschnitt (400C) geformt ist, sodass er an einer Seite geöffnet ist, und
das Hebeloch (200H) an der offenen einen Seite des Kammerabschnitts (400C) angeordnet ist.

6. Batteriemodul (100) nach Anspruch 3,
ferner umfassend Stromschienen (500), welche an dem ersten Stromschienenrahmen (410) und dem zweiten Stromschienenrahmen (420) montiert sind,
wobei Elektrodenleitungen (111, 112) der Batteriezellen (110) durch Leitungsschlitze passieren, welche in dem ersten Stromschienenrahmen (410) oder dem zweiten Stromschienenrahmen (420) gebildet sind, und dann gebogen und mit der Stromschiene (500) verbunden sind.

7. Batteriemodul (100) nach Anspruch 1, wobei:
das Einsetzungsloch (210) dazu eingerichtet ist, zu ermöglichen, dass ein Transferelement (900) darin eingesetzt wird, und
das Befestigungsloch (220H) dazu eingerichtet ist, zu ermöglichen, dass das Transferelement (900) das Batteriemodul (100) durch es hebt.

8. Batteriemodul (100) nach Anspruch 1, ferner umfassend:
Verbindungselemente (600), welche jeweils an jeder von der oberen und unteren Seite des Batteriezellenstapels (120) angeordnet sind und die erste Seitenplatte (210) und die zweite Seitenplatte (220) verbinden.

9. Batteriemodul (100) nach Anspruch 8, wobei:
die Verbindungselemente (600) Bandelemente (600a) sind, welche mit der ersten Seitenplatte (210) und der zweiten Seitenplatte (220) verbunden sind, und
das Bandelement (600a) einen Bandkörper (610a), welcher an der oberen Seite oder der unteren Seite des Batteriezellenstapels (120) angeordnet ist, und Bandklemmen (620a) umfasst, welche von dem Bandkörper (610a) gebogen und an jeder von der ersten Seitenplatte (210) und der zweiten Seitenplatte (220) fixiert sind.

10. Batteriemodul (100) nach Anspruch 8, wobei:
die Verbindungselemente (600) lange Bolzenelemente (600b) umfassen, welche mit der ersten Seitenplatte (210) und der zweiten Seitenplatte (220) befestigt sind.

11. Batteriemodul (100) nach Anspruch 8, wobei:
die Verbindungselemente (600) entfernt voneinander an der oberen Seite oder der unteren Seite des Batteriezellenstapels (120) angeordnet sind.

12. Batteriepack, umfassend:
das Batteriemodul (100) nach Anspruch 1; und
eine Packablage (1100), welche das Batteriemodul (100) aufnimmt, wobei die erste Seitenplatte (210) und die zweite Seitenplatte (220) des Batteriemoduls (100) an der Packablage (1100) fixiert sind.

13. Batteriepack nach Anspruch 12, wobei:
die erste Seitenplatte (210) und die zweite Seitenplatte (220) jeweils einen Halterungsabschnitt (200S), welcher senkrecht zu dem unteren Abschnitt der Packablage (1100) angeordnet ist, sodass er die äußere Batteriezelle (110) des Batteriezellenstapels (120) haltert, und einen Fixierungsabschnitt (200F) umfassen, welcher in einer Richtung senkrecht zu einer Fläche des Halterungsabschnitts (200S) hervorsteht, und der Fixierungsabschnitt (200F) an der Packablage (1100) fixiert ist.

14. Batteriepack nach Anspruch 13,
ferner umfassend eine Montierungsstrebe (1200), welche an der oberen Fläche des unteren Abschnitts der Packablage (1100) angeordnet ist, wobei der Fixierungsabschnitt (200F) an der Montierungsstrebe (1200) fixiert ist, und
wobei der Fixierungsabschnitt (200F) in der Höhenrichtung höher angeordnet ist als die Höhe der Montierungsstrebe (1200).

## Revendications

1. Module de batterie (100) comprenant :
un empilement d'éléments de batterie (120) dans lequel une pluralité d'éléments de batterie (110) sont empilés le long d'une direction parallèle à l'axe y ; et
une première plaque latérale (210) et une seconde plaque latérale (220) situées chacune au niveau des deux surfaces latérales de l'empilement d'éléments de batterie (120) dans la direction parallèle à l'axe y,
dans lequel au moins un trou de levage (200H) est un trou traversant formé dans chacune de la première plaque latérale (210) et de la seconde plaque latérale (220),
dans lequel le trou de levage (200H) a une forme dans laquelle un trou d'insertion (210H) et un trou de fixation (220H) se chevauchent, et
dans lequel une zone d'ouverture du trou d'insertion (210H) est plus grande qu'une zone d'ouverture du trou de fixation (220H), et le trou de fixation (220H) est situé plus haut que le trou d'insertion (210H).

2. Module de batterie (100) selon la revendication 1, dans lequel :
le trou d'insertion (210H) et le trou de fixation (220H) ont chacun une forme qui les rend ouverts de manière circulaire ou de manière polygonale (220H).

3. Module de batterie selon la revendication 1, comprenant en outre :
une première plaque d'extrémité (31) et une seconde plaque d'extrémité (320) situées chacune sur un côté et l'autre côté de l'empilement d'éléments de batterie (120) ;
un premier châssis de bus-barre (410) situé entre l'empilement d'éléments de batterie (120) et la première plaque d'extrémité (310) ; et
un second châssis de bus-barre (420) situé entre l'empilement d'éléments de batterie (120) et la seconde plaque d'extrémité (320),
dans lequel la première plaque d'extrémité (310) et le premier châssis de bus-barre (410) sont situés séquentiellement sur un côté de la direction de l'axe x dans laquelle les conducteurs d'électrode (111) des éléments de batterie (110) font saillie,
dans lequel la seconde plaque d'extrémité (320) et le second châssis de bus-barre (430) sont situés séquentiellement sur l'autre côté de la direction de l'axe x dans laquelle les autres conducteurs d'électrode (112) des éléments de batterie (110) font saillie,
dans lequel l'au moins un trou de levage (200H) formé dans la première plaque latérale (210) est formé dans une partie de la première plaque latérale (210) correspondant au premier châssis de bus-barre (410) et correspondant au second châssis de bus-barre (420), et
l'au moins un trou de levage (200H) formé dans la seconde plaque latérale (220) est formé dans une partie de la seconde plaque latérale (220) correspondant au premier châssis de bus-barre (410) et correspondant au second châssis de bus-barre (420).

4. Module de batterie (100) selon la revendication 3, dans lequel :
une partie de chambre est formée dans chacune d'une première partie de châssis de bus-barre correspondant à l'un des trous de levage et d'une seconde partie de châssis de bus-barre correspondant à l'autre des trous de levage.

5. Module de batterie (100) selon la revendication 4, dans lequel :
la partie de chambre (400C) a une forme qui la rend ouverte d'un côté, et
le trou de levage (200H) est situé du côté ouvert de la partie de chambre (400C).

6. Module de batterie (100) selon la revendication 3,
comprenant en outre des bus-barres (500) montées sur le premier châssis de bus-barre (410) et le second châssis de bus-barre (420),
dans lequel des conducteurs d'électrode (111, 112) des éléments de batterie (110) passent à travers des fentes de conducteurs formées dans le premier châssis de bus-barre (410) ou le second châssis de bus-barre (420), puis sont courbés et reliés à la bus-barre (500).

7. Module de batterie (100) selon la revendication 1, dans lequel :
le trou d'insertion (210) est configuré pour permettre à un organe de transfert (900) d'être inséré dans celui-ci, et
le trou de fixation (220H) est configuré pour permettre à l'organe de transfert (900) de soulever le module de batterie (100) à travers lui.

8. Module de batterie (100) selon la revendication 1, comprenant en outre :
des organes de liaison (600) qui sont situés chacun de chacun des côtés supérieur et inférieur de l'empilement d'éléments de batterie (120), et relient la première plaque latérale (210) et la seconde plaque latérale (220).

9. Module de batterie (100) selon la revendication 8, dans lequel :
les organes de liaison (600) sont des éléments de bande (600a) qui sont reliés à la première plaque latérale (210) et à la seconde plaque latérale (220), et
l'élément de bande (600a) comprend un corps de bande (610a) disposé sur le côté supérieur ou le côté inférieur de l'empilement d'éléments de batterie (120), et des clips de bande (620a) pliés à partir du corps de bande (610a) et fixés à chacune de la première plaque latérale (210) et de la seconde plaque latérale (220).

10. Module de batterie (100) selon la revendication 8, dans lequel :
les organes de liaison (600) comprennent des éléments de boulons longs (600b) qui sont fixés avec la première plaque latérale (210) et la seconde plaque latérale (220).

11. Module de batterie (100) selon la revendication 8, dans lequel :
les organes de liaison (600) sont disposés à distance les uns des autres sur le côté supérieur ou le côté inférieur de l'empilement d'éléments de batterie (120).

12. Bloc-batterie comprenant :
le module de batterie (100) selon la revendication 1 ; et
un plateau de bloc (1100) qui abrite le module de batterie (100),
dans lequel la première plaque latérale (210) et la seconde plaque latérale (220) du module de batterie (100) sont fixées au plateau de bloc (1100).

13. Bloc-batterie selon la revendication 12, dans lequel :
la première plaque latérale (210) et la seconde plaque latérale (220) comprennent chacune une partie de support (200S) qui est disposée perpendiculairement à la partie de fond du plateau de bloc (1100) de manière à supporter l'élément de batterie (110) le plus extérieur de l'empilement d'éléments de batterie (120), et une partie de fixation (200F) qui fait saillie dans une direction perpendiculaire à une surface de la partie de support (200S), et
la partie de fixation (200F) est fixée au plateau de bloc (1100).

14. Bloc-batterie selon la revendication 13,
comprenant en outre une poutre de montage (1200) qui est disposée sur la surface supérieure de la partie de fond du plateau de bloc (1100),
dans lequel la partie de fixation (200F) est fixée à la poutre de montage (1200), et
dans lequel la partie de fixation (200F) est située plus haut que la hauteur de la poutre de montage (1200) dans la direction de hauteur.
